# FASCICULE DE BREVET EUROPEEN

(11) **EP 2 172 383 B1**
(45) Date de publication et mention de la délivrance du brevet: **12.09.2012**
(21) Numéro de dépôt: 09012615.2
(22) Date de dépôt: 06.10.2009
(51) Int. Cl.: B61D 17/22, B60D 5/00

(54) **Couloir d'intercirculation entre deux véhicules**
Verbindungsdurchgang zwischen zwei Fahrzeugen
Communication passage between two vehicles

(30) Priorité: 06.10.2008 FR 0805501
(43) Date de publication de la demande: 07.04.2010
(73) Titulaire: FAIVELEY TRANSPORT, 93200 Saint Denis (FR)
(72) Inventeur: Carrion Espelta, Juan, Les Boryres del Camp (ES); Paumier, Carine, 37270 Azey sur Cher (FR)
(74) Mandataire: Novagraaf Technologies

(56) Documents cités:
- EP-A- 0 616 937
- FR-A- 2 823 265

## Description

### DOMAINE TECHNIQUE DE L'INVENTION

L'invention se rapporte à un couloir d'intercirculation pour relier deux plateformes articulées entre elles en permettant le passage des passagers d'une plateforme à l'autre, selon les caractéristiques du préambule de la revendication indépendante 1, tout en autorisant les mouvements relatifs des plateformes entre elles. Un tel couloir d'intercirculation est par exemple utilisé dans les trains, les bus, les tramways, les métros ou tout autre type de véhicules ou de couloirs articulés.

### ETAT DE LA TECHNIQUE ANTERIEURE

Généralement, les couloirs d'intercirculation sont constitués d'un soufflet flexible qui protège les voyageurs de l'environnement extérieur et d'un plancher déformable sur lequel les voyageurs se déplacent. Un tel couloir d'intercirculation est par exemple décrit dans le document FR2682344.

Le couloir d'intercirculation doit permettre les mouvements relatifs des voitures entre elles, en particulier dans les courbes ou lorsque la voie présente un dévers ou une déclivité variables. Pour cela, le soufflet est le plus souvent constitué de plusieurs anneaux en matériau élastomérique, reliés entre eux par des profilés. Un tel soufflet est par exemple décrit dans le document FR2823265. Ce soufflet, flexible et autoporteur, se déforme pour permettre les mouvements relatifs des deux voitures.

Le plancher, destiné à permettre aux voyageurs de passer d'une extrémité à l'autre du soufflet, doit suivre les mouvements du soufflet, et par conséquent il est soumis à d'importants débattements, en particulier en flexion autour d'un axe vertical (correspondant à un déplacement angulaire d'une voiture par rapport à l'autre dans une courbe) et en cisaillement (correspondant à un mouvement relatif transversal de translation entre deux voitures). Le plancher doit en outre être suffisamment résistant pour supporter le poids des passagers. Pour répondre à ces contraintes, différentes géométries de plancher sont connues.

Ainsi, le document FR2617453 décrit un plancher déformable constitué d'une paroi épaisse en accordéon qui est liée à des barres rigides transversales dont le montage à chacune de leurs extrémités, sur un axe support longitudinal, autorise le débattement latéral desdites barres rigides. Ce plancher est résistant et il peut se déformer en cisaillement ou pour suivre les changements de dénivellation. Cependant, ce plancher n'est pas autoportant c'est-à-dire qu'il nécessite l'utilisation d'une structure pour porter le plancher. Cette structure est constituée ici par les barres rigides transversales et par le support longitudinal. En outre, ce plancher ne peut subir que de petites déformations en cisaillement. En particulier, ce plancher n'est pas du tout adapté pour subir de grandes déformations suivant l'axe longitudinal du véhicule. Par ailleurs, ce plancher d'un seul tenant ne peut pas s'adapter à toutes les tailles de soufflet.

On connaît également le document EP0616937 (état de la technique le plus pertinent) qui décrit un plancher d'intercirculation constitué d'une pluralité de lames individuelles s'étendant perpendiculairement à l'axe longitudinal du véhicule. Dans ce document, les lattes se chevauchent et peuvent coulisser les unes par rapport aux autres suivant l'axe longitudinal du véhicule. Ce plancher est bien adapté aux déformations verticales ou suivant l'axe longitudinal du véhicule mais il ne peut pas se déformer en torsion et il n'est pas parfaitement plat, si bien que la circulation des passagers à sa surface peut d'avérer difficile.

On connaît également le document DE3305062 qui décrit un plancher constitué de lattes individuelles s'étendant perpendiculairement à l'axe longitudinal du véhicule. Ces lattes individuelles sont pourvues de moyens élastiques permettant un mouvement latéral entre les lattes. Ce plancher est particulièrement bien adapté pour se déformer suivant une direction perpendiculaire à l'axe longitudinal du véhicule, mais il ne peut pas se déformer en torsion ou suivant l'axe longitudinal du véhicule.

Ainsi, tous les planchers d'intercirculation connus à ce jour permettent soit des mouvements d'allongement et de compression du couloir d'intercirculation, soit des mouvements à la manière d'un éventail, soit des mouvements suivant un plan vertical. Mais aucun des planchers d'intercirculation connus à ce jour n'autorise tous ces mouvements, surtout lorsque ces mouvements sont de grande amplitude.

### EXPOSE DE L'INVENTION

L'invention vise à remédier aux inconvénients de l'état de la technique en proposant un couloir d'intercirculation pourvu d'un plancher autoportant, s'adaptant à toutes les tailles de soufflet et qui peut effectuer des mouvements d'allongement, de compression, de cisaillement ou de torsion de grande amplitude, et ce, dans toutes les directions.

Plus précisément, l'invention concerne un couloir d'intercirculation permettant de relier deux plateformes articulées l'une à l'autre et s'étendant suivant un axe longitudinal, le couloir d'intercirculation comportant :
- un soufflet formé par une pluralité d'anneaux déformables et fixés deux à deux par des interfaces de fixation s'étendant chacune dans un plan perpendiculaire à l'axe longitudinal ; et
- un plancher comportant une pluralité de lattes individuelles monoblocs s'étendant parallèlement à un axe transversal perpendiculaire à l'axe longitudinal ;
dans lequel chaque latte individuelle comporte un plateau déformable suivant l'axe longitudinal du couloir et deux côtés opposés s'étendant perpendiculairement à l'axe longitudinal du couloir de part et d'autre du plateau et fixés, directement ou indirectement, à deux des interfaces de fixation de manière à permettre un déplacement relatif desdites deux interfaces de fixation parallèlement à l'axe longitudinal du couloir.

Ce couloir d'intercirculation est destiné à être placé notamment dans un véhicule articulé pour le transport ferroviaire ou routier de passager, comme un train, un tramway, un métro ou encore un bus, qui est formé de plusieurs voitures. Le terme « voiture » s'entend donc ici de manière large, et inclut des voitures équipées deux bogies ou trains roulants, aussi bien que des voitures à un bogie ou un train roulant, des voitures dont les bogies sont situés sous l'intercirculation, des remorques et des semi-remorque, des véhicules tractants, tractés ou automoteurs. D'autres applications à des couloirs articulés, par exemple pour des rampes d'accès d'installation aéroportuaires, sont également envisagées. Dans tous les cas, on pourra définir l'axe longitudinal de référence comme un axe correspondant à l'alignement des deux plateformes de la structure articulée en question, et plus généralement comme un axe correspondant à une direction de circulation dans i'intercirculation.

Le soufflet formé d'une pluralité d'anneaux déformables peut se déformer pour permettre les mouvements relatifs des voitures entre elles. Ces déformations sont particulièrement nécessaires dans les courbes ou les contre-courbes, ainsi que lors de changements de dénivellation et de dévers.

Le plancher suivant l'invention peut suivre les mouvements des soufflets, quelle que soit leur amplitude ou leur nature.

Ce plancher peut être placé dans tout type de soufflet, quelle que soit sa longueur puisque l'on peut adapter la longueur du plancher en ajoutant ou en retirant des lattes individuelles.

Avantageusement, le plancher est autoportant, c'est-à-dire qu'il ne nécessite pas de structure porteuse supplémentaire. En effet, les lattes individuelles sont fixées et supportées par les interfaces de fixation des anneaux du soufflet. Il n'y a donc pas besoin d'ajouter de support ou de pièces de fixation supplémentaires ce qui permet d'effectuer une économie de pièce. En particulier, il n'y a pas besoin d'ajouter de barres longitudinales ou tranversales pour supporter le plancher. En outre, le plancher est fixé au soufflet, et par conséquent, une fois le soufflet et le plancher assemblés ensemble, le couloir d'intercirculation forme un tout, prêt à être utilisé.

Préférentiellement, chaque latte individuelle est fixée à un anneau individuel, et ainsi, chaque latte peut suivre les mouvements verticaux de l'anneau auquel elle est reliée. Plus précisément, chaque latte individuelle, se trouve de préférence face à un anneau individuel.

Chaque latte peut se déformer suivant l'axe longitudinal, ce qui permet les mouvements d'allongement ou de compression du plancher suivant l'axe longitudinal.

Pour cela, chaque latte peut par exemple être réalisée dans un matériau déformable élastiquement et/ou le plateau peut être pourvu d'ondulations.

Suivant différents modes de réalisation :
- les ondulations du plateau peuvent s'étendre parallèlement à l'axe transversal, sur toute la surface du plateau. Les ondulations parallèles à l'axe transversal permettent à la latte de se déformer suivant l'axe longitudinal. La présence des ondulations sur toute la surface de la latte permet à la latte de se déformer sur toute sa surface suivant l'axe longitudinal;
- le plateau de chaque latte peut être pourvu de deux extrémités transversales de part et d'autre d'un plan vertical longitudinal et entre lesquelles se trouve une partie centrale, la partie centrale étant plane et les ondulations du plateau étant localisées à proximité des extrémités transversales. Dans ce cas, seules les extrémités transversales de chaque plateau se déforment suivant l'axe longitudinal, tandis que la partie centrale de chaque latte, et donc la partie centrale du plancher reste fixe. Ce type de déformation localisées du plancher peut être avantageux puisque ainsi le plancher peut suivre les déformations en flexion du soufflet autour d'un axe vertical, tout en étant peu déformable en son centre afin d'améliorer le confort des passagers.

Dans ce dernier mode de réalisation, l'amplitude des ondulations peut être constante ou elle peut augmenter lorsqu'on se déplace sur l'axe transversal de la partie centrale vers une des extrémités transversales. Ainsi les déformations suivant l'axe longitudinal sont progressives : elles sont peu importantes au centre du plancher et leur amplitude augmente lorsque l'on se déplace en direction des extrémités longitudinales des lattes et donc du soufflet. Par ailleurs, cette géométrie favorise également les mouvements « en éventail » du plancher.

Cette géométrie en ondulations permet également au plancher de se déformer, tout en restant continu. En effet, lorsque les soufflets sont en extension, le plancher est également en extension, par l'intermédiaire des ondulations qui s'allongent et par conséquent, les différentes lattes restent jointives. De même, en compression, les ondulations se resserrent et les lattes restent jointives, sans se superposer.

De préférence, les ondulations sont irrégulières et les zones de pleins, en saillie vers l'intérieur de l'intercirculation, sur lesquelles les passagers marchent sont plus longues que les zones de creux. Ainsi, les zones de creux, de très petites dimensions longitudinales, ne gênent pas la marche des passagers.

Avantageusement, les côtés opposés de chaque latte forment deux parois verticales perpendiculaires à l'axe longitudinal du couloir et faisant saillie du plateau, les parois verticales reliant le plateau aux extrémités longitudinales de chaque latte. Ainsi le plateau, qui est de préférence constitué par une paroi horizontale, constitue une surface plane sur laquelle les passagers peuvent marcher, tandis que les parois verticales permettent la fixation des lattes aux interfaces de fixation. Ainsi, la fixation se trouve sous la paroi horizontale sur laquelle les passagers marchent.

Avantageusement, chaque paroi verticale est pourvue d'alvéoles et est déformable en cisaillement dans le plan vertical dans lequel la paroi verticale s'étend, de manière à permettre un mouvement relatif du plateau par rapport aux interfaces de fixation parallèlement à l'axe transversal, sans déformation du plateau. Ces alvéoles permettent aux lattes de se déformer suivant l'axe transversal, ce qui permet au plancher de se déformer en cisaillement. La déformation en cisaillement autorisée par le plancher peut être contrôlée en fonction du nombre et de la taille des alvéoles.

Avantageusement, les alvéoles ont une forme oblongue, chaque alvéole s'étendant suivant un axe vertical 18 afin de permettre les déformations latérales du plancher alternativement d'un côté et de l'autre.

Le plancher peut également être pourvu de glissières s'étendant suivant l'axe transversal, chaque glissière s'intercalant entre deux lattes successives et chaque glissière étant reliée à une interface de fixation, chaque latte étant reliée à une interface de fixation par l'intermédiaire d'une glissière dans laquelle elle peut coulisser suivant l'axe transversal. Ces glissières permettent aux lattes de se déplacer suivant l'axe transversal d'une amplitude importante et ainsi, elles permettent les mouvements latéraux du plancher.

Les glissières peuvent en outre être pourvues de butées pour limiter l'amplitude des mouvements des lattes entre elles.

Selon différents modes de réalisation :
- chaque latte présente un plan de symétrie vertical longitudinal, ce qui facilite son montage ;
- chaque latte présente un plan de symétrie vertical perpendiculaire à l'axe longitudinal ;
- le couloir présente un plan de symétrie vertical longitudinal;
- le couloir présente un plan de symétrie vertical perpendiculaire à l'axe longitudinal;
- les soufflets ont un profil en U.

L'invention concerne également un véhicule pour le transport routier ou ferroviaire de passagers, s'étendant suivant un axe longitudinal et comportant au moins deux voitures comportant chacune une plateforme, les plateformes étant reliées entre elles par un couloir d'intercirculation selon un des modes de réalisation précédents.

### BREVE DESCRIPTION DES FIGURES

D'autres caractéristiques et avantages de l'invention ressortiront à la lecture de la description qui suit, en référence aux figures annexées, qui illustrent :
- la figure 1, une vue de côté d'un tramway selon un mode de réalisation de l'invention;
- la figure 2, une vue en perspective d'une couloir d'intercirculation selon un mode de réalisation de l'invention ;
- la figure 3, une vue en coupe longitudinale du plancher du couloir d'intercirculation de la figure 2 ;
- la figure 4, une vue en perspective d'une latte individuelle du plancher de la figure 2 ;
- la figure 5, une vue en coupe longitudinale d'un plancher selon un autre mode de réalisation de l'invention;
- les figures 6, 7 et 8, trois vue en perspective illustrant trois étapes du montage du plancher de la figure 5.

Pour plus de clarté, les éléments identiques ou similaires sont repérés par des signes de référence identiques sur l'ensemble des figures.

### DESCRIPTION DETAILLEE D'UN MODE DE REALISATION

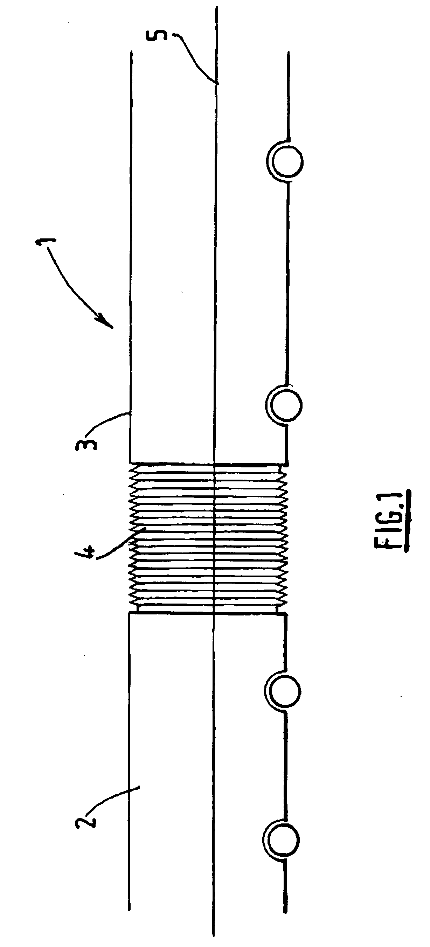

La figure 1 représente un véhicule ferroviaire 1 conformément à l'invention comportant deux voitures 2, 3 articulées l'une par rapport à l'autre et reliées entre elles par un couloir d'intercirculation 4. Ce véhicule 1 s'étend suivant un axe longitudinal 5.

Dans la suite, l'adjectif « longitudinal » sera utilisé pour désigner un plan, un objet, une ligne qui s'étend parallèlement à cet axe longitudinal 5, tandis que l'adjectif « transversal » sera utilisé pour désigner une direction perpendiculaire à cet axe longitudinal et dans le même plan horizontal ou dans un plan horizontal parallèle.

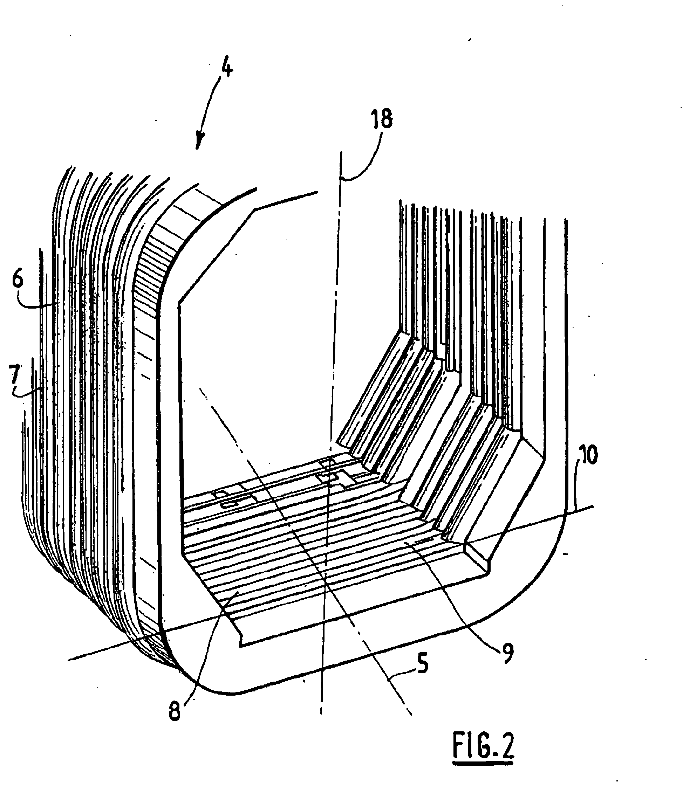

Le couloir d'intercirculation 4 est représenté plus précisément sur la figure 2. Ce couloir d'intercirculation comporte un soufflet 6 formé par une pluralité d'anneaux 7 reliés entre eux par des profilés. Le soufflet utilisé ici est semblable à celui décrit dans le document FR2823265, mais tout autre géométrie de soufflet peut être utilisée. De manière notable, ce type de soufflet est autoportant, c'est-à-dire qu'il se maintient lui-même en position en étant supporté par ses extrémités, du fait de la rigidité des anneaux. Ce couloir d'intercirculation ne nécessite pas d'armature porteuse supplémentaire. Le couloir d'intercirculation comporte également un plancher 8 comportant une pluralité de lattes individuelles 9, chaque latte s'étendant suivant l'axe transversal 10 du véhicule 1.

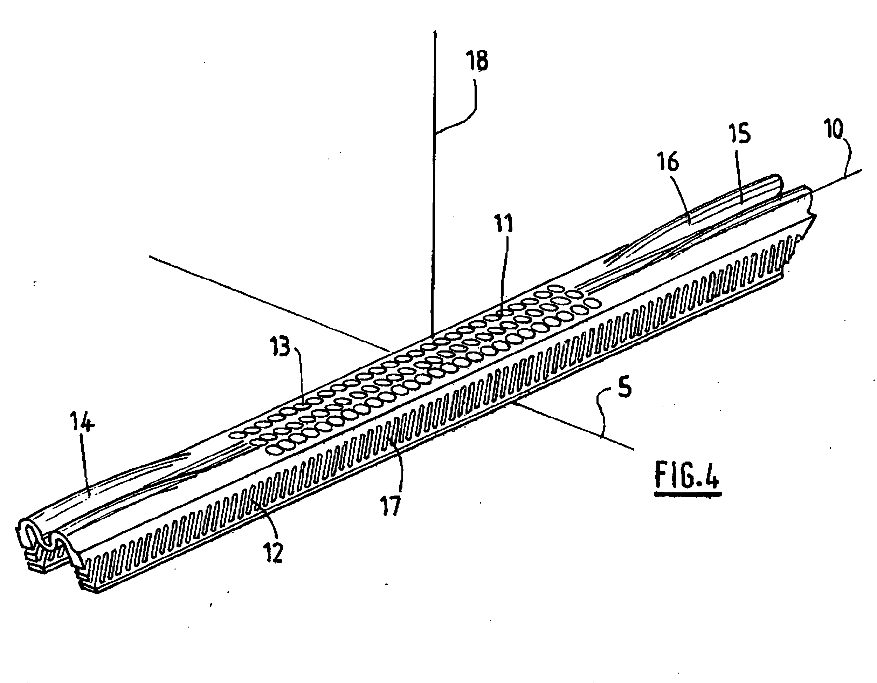

Une latte individuelle 9 est représentée plus précisément sur la figure 4. Cette latte comprend un plateau horizontal 11 duquel font saillie deux parois verticales 12. Le plateau horizontal 11 comporte deux extrémités transversales 14, 15 s'étendant de part et d'autre d'un plan vertical longitudinal. Une partie centrale 13 se trouve entre ces deux extrémités transversales 14, 15. La partie centrale 13 est plane, tandis que les extrémités transversales 14, 15 sont pourvues d'ondulations 16 qui s'étendent parallèlement à l'axe transversal 10. L'amplitude de ces oscillations augmente lorsque l'on se déplace sur l'axe transversal depuis la partie centrale 13 vers chacune des extrémités 14 ou 15.

Les parois verticales 12 sont pourvues d'alvéoles 17 qui ont une forme oblongue et qui s'étendent parallèlement un axe vertical 18. Ces alvéoles permettent aux lattes de se déformer en cisaillement, et ainsi le plancher peut se déformer parallèlement à l'axe transversal.

Chaque latte individuelle 9 est monobloc et elle est constituée d'un matériau déformable élastiquement, par exemple en caoutchouc.

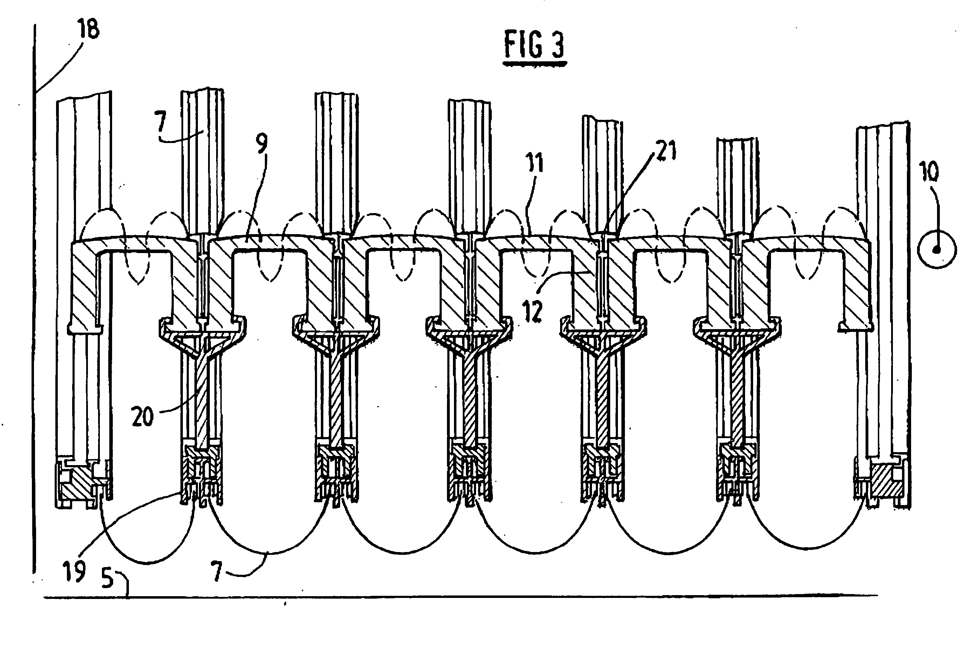

L'assemblage de lattes individuelles 9 dans un couloir d'intercirculation selon l'invention est représenté sur la figure 3. Dans cet assemblage, les soufflets 7 sont reliés entre eux par des profilés 19 qui s'étendent suivant l'axe transversal. Sur ses profilés 19 sont fixés des profilés complémentaires 20 qui s'étendent également parallèlement à l'axe transversal. Les lattes 9 sont reliées entre elles et avec les anneaux des soufflets grâce aux profilés 20. Chaque profilé complémentaire 20 maintient ensemble deux parois verticales 12 de deux lattes consécutives 9, tandis que chaque profilé 19 maintient ensemble deux anneaux successifs 7. Ainsi, chaque interface de fixation, formée par un profilé 19 et un profilé complémentaire 20 maintient ensemble deux lattes individuelles 9 successives et deux anneaux successifs 7. Dans cet assemblage, chaque latte individuelle se trouve en face d'un anneau, de sorte que lorsqu'un anneau se déforme, la latte correspondante se déforme également. Cette déformation de la latte est possible en compression et en extension au centre de la latte puisque la latte est constituée d'un matériau déformable élastiquement. En outre, les extrémités transversales 14, 15 de chaque latte peuvent subir des déformations de grande amplitude grâce aux ondulations. La déformation des extrémités transversales 14, 15 des lattes est surtout utile lors des courbes ou des contre-courbes et c'est pourquoi une déformation plus grande est permise pour les extrémités transversales des lattes que pour leur partie centrale. Ainsi, le plancher peut se déformer « en éventail », à chacun de ses extrémités transversales. Par ailleurs, lors de différence de dénivellation, chaque latte, ou chaque paire de latte, peut effectuer des mouvements verticaux.

Entre deux lattes successives, se trouve un joint 21 qui s'étend parallèlement à l'axe transversal. Ce joint 21, de section transversale en forme de T, permet de combler l'espace entre deux lattes successives 9, afin d'améliorer le confort des passagers qui marchent sur la plancher.

Le plancher peut donc se déformer suivant l'axe longitudinal et dans les courbes ou les contre-courbes grâce aux ondulations et à la composition des lattes en caoutchouc, il peut également se déformer suivant l'axe transversal grâce aux alvéoles et il peut aussi se déformer verticalement puisque le plancher est discontinu. En outre, la taille du plancher peut d'adapter à toute les longueurs de soufflet en ajoutant ou en retirant des lattes.

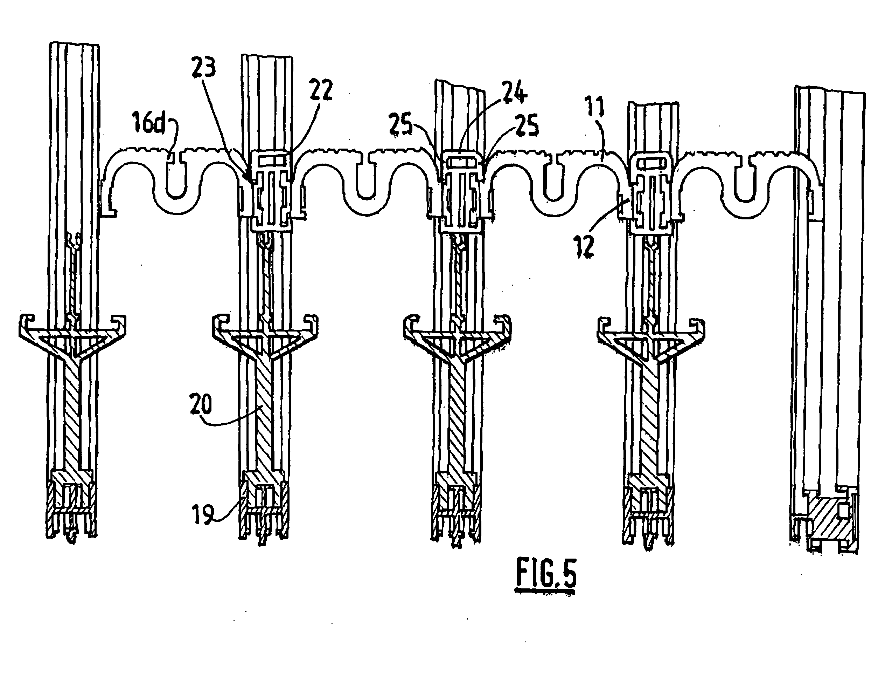

La figure 5 représente un plancher pour couloir d'intercirculation selon un autre mode de réalisation de l'invention. Dans ce mode de réalisation, le soufflet est identique au soufflet du mode de réalisation précédent puisqu'il est constitué d'une pluralité d'anneaux, deux anneaux successifs étant reliés grâce à deux profilés 19 s'étendant suivant l'axe transversal du véhicule. Sur chaque profilé 19 est également fixé un profité complémentaire 20. Une interface de fixation est constituée d'un profilé 19 et d'un profilé complémentaire 20. Chaque latte individuelle 9 est fixée à deux interfaces de fixation par l'intermédiaire de deux glissières 22. Ainsi, le plancher est supporté par les interfaces de fixation. Chaque latte se trouve en face d'un anneau du soufflet. Les glissières permettent aux lattes de coulisser suivant l'axe transversal. Chaque glissière s'étend transversalement sur la même distance que les lattes individuelles.

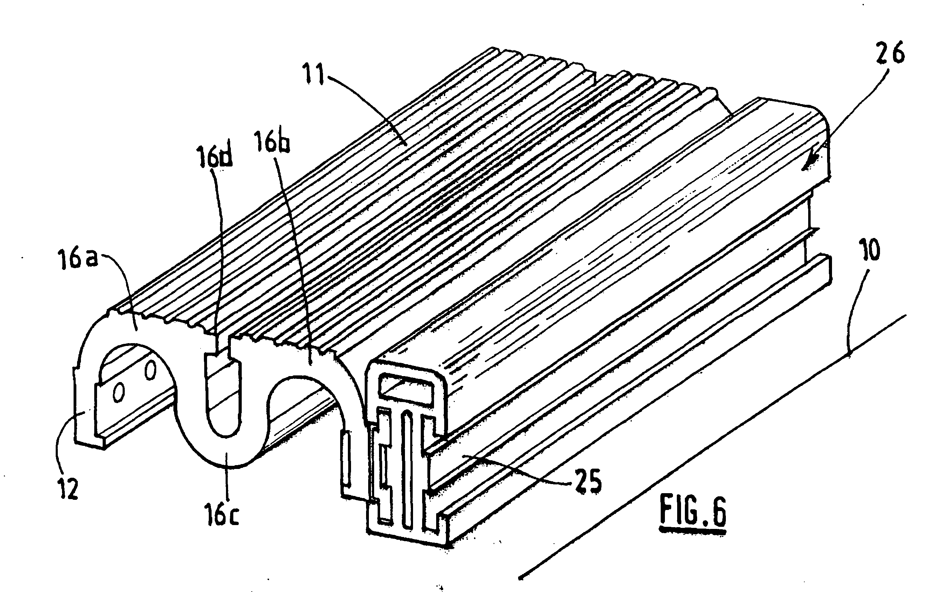

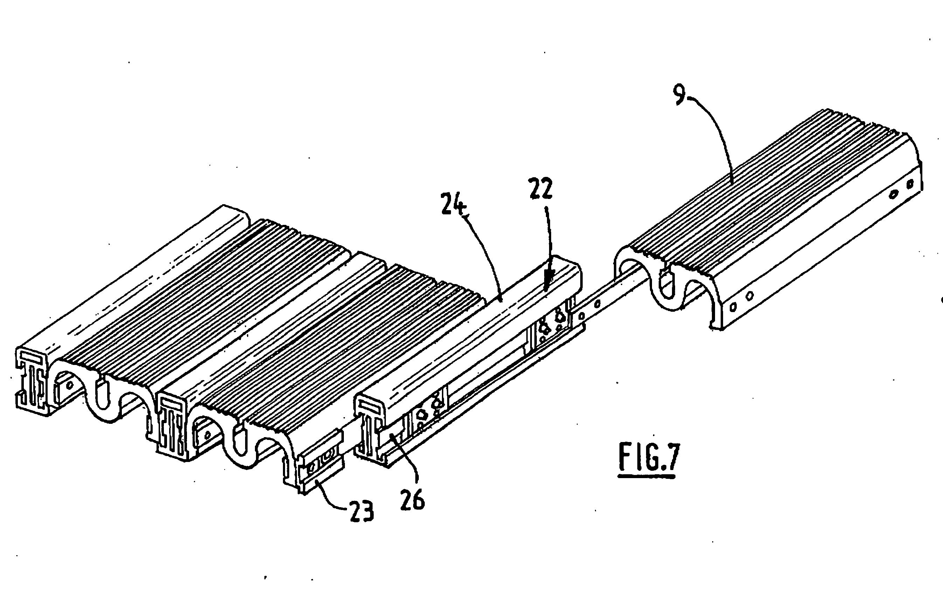

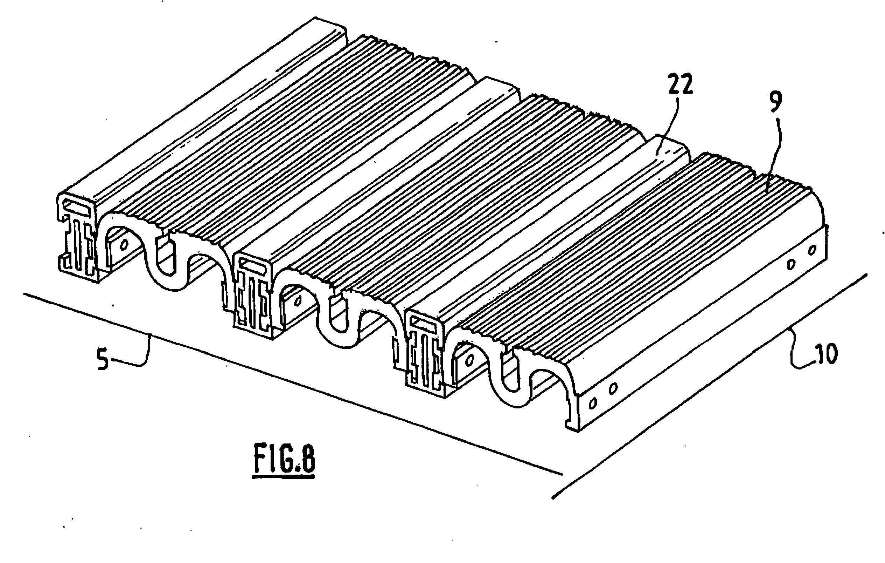

L'assemblage de lattes individuelles et de glissières est représenté plus précisément sur les figures 6, 7 et 8. Chaque latte comporte un plateau horizontal 11 dont font saillie deux parois verticales 12. Le plateau horizontal 11 est pourvu d'ondulations 16 qui s'étendent parallèlement à l'axe transversal 10 sur toute la surface du plateau horizontal 11. Ces ondulations comportent deux zones de plein 16a, 16b entre lesquelles se trouve une zone de creux 16c. La paroi supérieure de chaque zone de plein est plane et elle comporte une languette 16d en saillie horizontale au dessus de la zone de creux 16c. Les languettes 16d de chaque zone de plein se font face et elles bloquent l'accès à la zone de creux. Ainsi les utilisateurs peuvent marcher aisément sur la plancher dont la surface est globalement plane, et dans le même temps, le plancher peut se déformer suivant l'axe longitudinal grâce aux ondulations.

Les parois verticales 12 de chaque latte sont pourvues de sabots 23. Chaque glissière 22 comporte une paroi horizontale 24 qui est globalement plane et deux parois verticales 25. Chaque paroi verticale 25 comporte un rail 26 dans lequel vient s'insérer le sabot 23 d'une latte. Le rail 26 s'étend sur toute la longueur de la glissière. Les glissières permettent aux lattes de se déplacer transversalement les unes par rapport aux autres.

Dans ce second mode de réalisation, la surface sur laquelle les passagers peuvent marcher est donc constituée par les zones de pleins 16a, 16b et leurs languettes 16d, ainsi que par la surface supérieure 24 de chaque glissière. Le plancher peut se déformer longitudinalement en compression et en traction grâce aux ondulations, qui permettent également une déformation en torsion dans les courbes, et il peut se déformer en cisaillement, suivant l'axe transversal, grâce aux glissières.

Naturellement, l'invention n'est pas limitée aux exemples de réalisation ci-dessus, et diverses modifications ou variantes peuvent être envisagées. On peut également envisager de combiner les deux modes de réalisation ci-dessus : par exemple, on peut réaliser des lattes pourvues d'alvéoles sur leurs parois latérales et qui en outre sont reliées aux interfaces de fixation par l'intermédiaire de glissières. D'autres configurations peuvent également être utilisées pour les interfaces de fixation : par exemple, les interfaces de fixation peuvent être d'un seul tenant.

On peut également envisager d'avoir une autre géométrie d'ondulations : par exemple, en coupe longitudinale, les « ondulations » peuvent être rectangulaires ou triangulaires.

Dans les exemples de réalisations, le nombre d'anneaux et le nombre de lattes de plancher sont égaux. On peut toutefois envisager des lattes de plancher plus larges, recouvrant chacune deux anneaux, et ceci pour tout ou partie du soufflet.

## Revendications

1. Couloir d'intercirculation (4) pour relier deux plateformes articulées s'étendant suivant un axe longitudinal, le couloir d'intercirculation comportant:
- un soufflet (6) formé par une pluralité d'anneaux (7) déformables et fixés deux à deux par des interfaces de fixation (19, 20) s'étendant chacune dans un plan perpendiculaire à l'axe longitudinal; et
- un plancher (8) comportant une pluralité de lattes individuelles (9) monoblocs s'étendant parallèlement à un axe transversal perpendiculaire à l'axe longitudinal; **caractérisé en ce que** chaque latte individuelle (9) comporte un plateau (11) déformable suivant l'axe longitudinal du couloir et deux côtés opposés (12) s'étendant perpendiculairement à l'axe longitudinal du couloir (4) de part et d'autre du plateau (11) et fixés, directement ou indirectement, à deux des interfaces de fixation (19, 20) de manière à permettre un déplacement relatif desdites deux interfaces de fixation (19, 20) parallèlement à l'axe longitudinal du couloir (4).

2. Couloir d'intercirculation (4) selon la revendication 1, **caractérisé en ce que** chaque latte individuelle (9) est réalisée dans un matériau déformable élastiquement.

3. Couloir d'intercirculation (4) selon la revendication 1 ou la revendication 2, **caractérisé en ce que** le plateau (11) est pourvu d'ondulations.

4. Couloir d'intercirculation (4) selon la revendication 3, **caractérisé en ce que** les ondulations du plateau (11) s'étendent parallèlement à l'axe transversal, sur toute la surface du plateau (11).

5. Couloir d'intercirculation (4) selon la revendication 3, dans lequel la paroi horizontale (11) de chaque latte (9) est pourvue de deux extrémités transversales (14, 15) de part et d'autre d'un plan vertical longitudinal et entre lesquelles se trouve une partie centrale (13), **caractérisé en ce que** la partie centrale (13) est plane et **en ce que** les ondulations de la paroi horizontale sont localisées à proximité des extrémités transversales (14, 15).

6. Couloir d'intercirculation (4) selon la revendication précédente, **caractérisé en ce que** l'amplitude des ondulations augmente lorsqu'on se déplace sur l'axe transversal de la partie centrale (13) vers une des extrémités transversales (14, 15).

7. Couloir d'intercirculation (4) selon l'une quelconque des revendications précédentes, **caractérisé en ce que** les côtés opposés de chaque latte (9) forment deux parois verticales (12) perpendiculaires à l'axe longitudinal du couloir (4) et faisant saillie du plateau (11), les parois verticales (12) reliant le plateau (11) aux extrémités longitudinales de chaque latte (9).

8. Couloir d'intercirculation (4) selon la revendication précédente, **caractérisé en ce que** chaque paroi verticale (12) est pourvue d'alvéoles (17) et est déformable en cisaillement dans le plan vertical dans lequel la paroi verticale (12) s'étend, de manière à permettre un mouvement relatif du plateau (11) par rapport aux interfaces de fixation (19, 20) parallèlement à l'axe transversal, sans déformation du plateau (11).

9. Couloir d'intercirculation (4) selon la revendication précédente, **caractérisé en ce que** les alvéoles (17) ont une forme oblongue, chaque alvéole (17) s'étendant suivant un axe vertical.

10. Couloir d'intercirculation (4) selon l'une quelconque des revendications précédentes, **caractérisé en ce que** le plancher (8) est en outre pourvu de glissières (22) s'étendant suivant l'axe transversal, chaque glissière (22) s'intercalant entre deux lattes (9) successives et chaque glissière (22) étant reliée à une interface de fixation (19, 20), chaque latte (9) étant reliée à une interface de fixation (19, 20) par l'intermédiaire d'une glissière (22) dans laquelle elle peut coulisser suivant l'axe transversal.

11. Couloir d'intercirculation (4) selon l'une quelconque des revendications précédentes, **caractérisé en ce que** chaque latte (9) présente un plan de symétrie vertical longitudinal.

12. Couloir d'intercirculation (4) selon l'une quelconque des revendications précédentes, **caractérisé en ce que** chaque latte (9) présente un plan de symétrie vertical perpendiculaire à l'axe longitudinal.

13. Couloir d'intercirculation (4) selon l'une quelconque des revendications précédentes, **caractérisé en ce que** le couloir (4) présente un plan de symétrie vertical longitudinal.

14. Couloir d'intercirculation (4) selon l'une quelconque des revendications précédentes, **caractérisé en ce que** le couloir (4) présente un plan de symétrie vertical perpendiculaire à l'axe longitudinal.

15. Couloir d'intercirculation (4) selon l'une quelconque des revendications précédentes, **caractérisé en ce que** les soufflets (6) ont un profil en U.

16. Couloir d'intercirculation (4) selon l'une quelconque des revendications précédentes, **caractérisé en ce que** le plancher (8) est autoportant.

17. Véhicule (1) pour le transport routier ou ferroviaire de passagers, comportant au moins deux voitures (2, 3) s'étendant suivant un axe longitudinal, dans lequel chaque voiture (2, 3) comporte une plateforme, les plateformes étant reliées par un couloir d'intercirculation (4) selon l'une quelconque des revendications précédentes.

## Claims

1. Intercommunicating corridor (4) for connecting two hinged platforms extending along a longitudinal axis, the intercommunicating corridor comprising:
- a bellows (6) formed by a plurality of deformable rings (7) and fixed in pairs by fixation interfaces (19, 20) each one extending in a plane perpendicular to the longitudinal axis; and
- a floor (8) comprising a plurality of individual single-unit slats (9) extending parallel to a transverse axis perpendicular to the longitudinal axis; **characterised in that** each individual slat (9) comprises a deformable plate (11) along the longitudinal axis of the corridor and two opposite sides (12) extending perpendicularly to the longitudinal axis of the corridor (4) on either side of the plate (11) and fixed, directly or indirectly, to two of the fixation interfaces (19, 20) in order to enable a relative displacement of the two said fixation interfaces (19, 20) parallel to the longitudinal axis of the corridor (4).

2. Intercommunicating corridor (4) according to claim 1, **characterised in that** each individual slat (9) is made from an elastically deformable material.

3. Intercommunicating corridor (4) according to claim 1 or claim 2, **characterised in that** the plate (11) is provided with undulations.

4. Intercommunicating corridor (4) according to claim 3, **characterised in that** the undulations of the plate (11) extend parallel to the transverse axis, over the whole surface of the plate (11).

5. Intercommunicating corridor (4) according to claim 3, whereby the horizontal wall (11) of each slat (9) is provided with two transverse ends (14, 15) on either side of a vertical longitudinal plane and between which a central part (13) is located, **characterised in that** the central part (13) is flat and **in that** the undulations of the horizontal wall are located near to the transverse ends (14, 15).

6. Intercommunicating corridor (4) according to the preceding claim, **characterised in that** the amplitude of the undulations increases when one moves over the transverse axis of the central part (13) towards one of the transverse ends (14, 15).

7. Intercommunicating corridor (4) according to any of the preceding claims, **characterised in that** the opposite sides of each slat (9) form two vertical walls (12) perpendicular to the longitudinal axis of the corridor (4) and protruding from the plate (11), the vertical walls (12) connecting the plate (11) to the longitudinal ends of each slat (9).

8. Intercommunicating corridor (4) according to the preceding claim, **characterised in that** each vertical wall (12) is provided with cavities (17) and is shear deformable in the vertical plane in which the vertical wall (12) extends, in order to enable a relative movement of the plate (11) in relation to the fixation interfaces (19, 20) parallel to the transverse axis, without deformation of the plate (11).

9. Intercommunicating corridor (4) according to the preceding claim, **characterised in that** the cavities (17) are oblong in shape, each cavity (17) extending along a vertical axis.

10. Intercommunicating corridor (4) according to any of the preceding claims, **characterised in that** the floor (8) is further provided with guide rails (22) extending along the transverse axis, each guide rail (22) being inserted between two successive slats (9) and each guide rail (22) being connected to a fixation interface (19, 20), each slat (9) being connected to a fixation interface (19, 20) by means of a guide rail (22) in which it can slide along the transverse axis.

11. Intercommunicating corridor (4) according to any of the preceding claims, **characterised in that** each slat (9) has a vertical longitudinal plane of symmetry.

12. Intercommunicating corridor (4) according to any of the preceding claims, **characterised in that** each slat (9) has a vertical plane of symmetry perpendicular to the longitudinal axis.

13. Intercommunicating corridor (4) according to any of the preceding claims, **characterised in that** the corridor (4) has a vertical longitudinal plane of symmetry.

14. Intercommunicating corridor (4) according to any of the preceding claims, **characterised in that** the corridor (4) has a vertical plane of symmetry perpendicular to the longitudinal axis.

15. Intercommunicating corridor (4) according to any of the preceding claims, **characterised in that** the bellows (6) have a U-profile.

16. Intercommunicating corridor (4) according to any of the preceding claims, **characterised in that** the floor (8) is self-supporting.

17. Vehicle (1) for the road or railway transport of passengers, comprising at least two carriages (2, 3) extending along a longitudinal axis, whereby each carriage (2, 3) comprises a platform, the platforms being connected by an intercommunicating corridor (4) according to any of the preceding claims.

## Patentansprüche

1. Verbindungsdurchgang (4) zum Verbinden von zwei aneinander angelenkten Plattformen, die sich entlang einer Längsachse erstrecken, wobei der Verbindungsdurchgang umfasst:
- einen Faltenbalg (6), der durch eine Mehrzahl von Ringen (7) gebildet wird, die verformbar sind und paarweise durch Befestigungsstellen (19, 20) befestigt sind, welche sich jeweils in einer Ebene senkrecht zur Längsachse erstrecken; und
- einen Boden (8) mit einer Mehrzahl von einzelnen einstückigen Planken (9), die sich parallel zu einer Querachse, senkrecht zur Längsachse, erstrecken;
**dadurch gekennzeichnet, dass** jede einzelne Planke (9) umfasst eine Platte (11), die in Längsachse des Verbindungsdurchgangs verformbar ist, und zwei gegenüberliegende Seiten (12), die sich senkrecht zu der Längsachse des Verbindungsdurchgangs (4) beiderseits der Platte (11) erstrecken und direkt oder indirekt an zwei Befestigungsstellen (19, 20) derart befestigt sind, dass eine Relativverschiebung der zwei Befestigungsstellen (19, 20) parallel zur Längsachse des Verbindungsdurchgangs (4) möglich ist.

2. Verbindungsdurchgang (4) nach Anspruch 1, **dadurch gekennzeichnet, dass** jede einzelne Planke (9) aus einem verformbaren elastischen Material hergestellt ist.

3. Verbindungsdurchgang (4) nach Anspruch 1 oder Anspruch 2, **dadurch gekennzeichnet, dass** die Platte (11) mit Wellungen versehen ist.

4. Verbindungsdurchgang (4) nach Anspruch 3, **dadurch gekennzeichnet, dass** sich die Wellungen der Platte (11) über der gesamten Oberfläche der Platte (11) parallel zur Querachse erstrecken.

5. Verbindungsdurchgang (4) nach Anspruch 3, in welchem die horizontale Wand (11) jeder Planke (9) mit zwei Querenden (14, 15) beiderseits einer vertikalen Längsebene versehen ist, zwischen welchen sich ein zentraler Bereich (13) befindet, **dadurch gekennzeichnet, dass** der zentrale Bereich (13) eben ist und dass die Wellungen der horizontalen Wand in der Nähe der Querenden (14, 15) lokalisiert sind.

6. Verbindungsdurchgang (4) nach dem vorhergehenden Anspruch, **dadurch gekennzeichnet, dass** die Amplitude der Wellungen zunimmt, wenn sich der zentrale Bereich (13) auf der Querachse in Richtung einer der Querenden (14, 15) verschiebt.

7. Verbindungsdurchgang (4) nach einem der vorhergehenden Ansprüche, **dadurch gekennzeichnet, dass** die gegenüberliegenden Seiten jeder Planke (9) zwei Vertikalwände (12) senkrecht zur Längsachse des Verbindungsdurchgangs (4) bilden und an die Platte (11) anstoßen, wobei die Vertikalwände (12) die Platte (11) mit den Längsenden jeder Planke (9) verbinden.

8. Verbindungsdurchgang (4) nach dem vorhergehenden Anspruch, **dadurch gekennzeichnet, dass** jede Vertikalwand (12) mit Waben (17) versehen ist und unter Abscherung in der Vertikalebene, in welcher sich die Vertikalwand (12) erstreckt, verformbar ist, derart, dass eine Relativbewegung der Platte (11) in Bezug zu den Befestigungsstellen (19, 20) parallel zur Querachse ohne Verformung der Platte (11) möglich ist.

9. Verbindungsdurchgang (4) nach dem vorhergehenden Anspruch, **dadurch gekennzeichnet, dass** die Waben (17) eine längliche Form haben, wobei sich jede Wabe (17) entlang einer Vertikalachse erstreckt.

10. Verbindungsdurchgang (4) nach einem der vorhergehenden Ansprüche, **dadurch gekennzeichnet, dass** der Boden (8) ferner mit Schienen (22) versehen ist, die sich entlang der Querachse erstrecken, wobei sich jede Schiene (22) zwischen zwei aufeinanderfolgende Planken (9) einschiebt und jede Schiene (22) mit einer Befestigungsstelle (19, 20) verbunden ist, wobei jede Planke (9) mit einer Befestigungsstelle (19, 20) mit Hilfe einer Schiene (22) verbunden ist, in welcher sie entlang der Querachse verschiebbar ist.

11. Verbindungsdurchgang (4) nach einem der vorhergehenden Ansprüche, **dadurch gekennzeichnet, dass** jede Planke (9) eine vertikale, sich längserstreckende Symmetrieebene aufweist.

12. Verbindungsdurchgang (4) nach einem der vorhergehenden Ansprüche, **dadurch gekennzeichnet, dass** jede Planke (9) eine vertikale Symmetrieebene senkrecht zur Längsachse aufweist.

13. Verbindungsdurchgang (4) nach einem der vorhergehenden Ansprüchen, **dadurch gekennzeichnet, dass** der Verbindungsdurchgang (4) eine vertikale längsverlaufende Symmetrieebene aufweist.

14. Verbindungsdurchgang (4) nach einem der vorhergehenden Ansprüche, **dadurch gekennzeichnet, dass** der Verbindungsdurchgang (4) eine vertikale Symmetrieebene senkrecht zur Längsachse aufweist.

15. Verbindungsdurchgang (4) nach einem der vorhergehenden Ansprüche, **dadurch gekennzeichnet, dass** die Faltenbalge (6) ein U-förmiges Profil haben.

16. Verbindungsdurchgang (4) nach einem der vorhergehenden Ansprüche, **dadurch gekennzeichnet, dass** der Boden (8) selbsttragend ist.

17. Fahrzeug (1) für den Personentransport im Straßen- oder Schienenverkehr, mit wenigstens zwei Wagen (2, 3), die sich entlang einer Längsachse erstrecken, in welchem jeder Wagen (2, 3) eine Plattform umfasst, wobei die Plattformen durch einen Verbindungsdurchgang (4) nach einem der vorhergehenden Ansprüche verbunden sind.
